# EUROPÄISCHE PATENTANMELDUNG

(11) **EP 1 820 965 A1**
(43) Veröffentlichungstag der Anmeldung: **22.08.2007**
(21) Anmeldenummer: 06003298.4
(22) Anmeldetag: 17.02.2006
(51) Int. Cl.: F03G 6/00

(54) **Verfahren und Vorrichtung zur Regelung eines solaren Energieertrags in einem solarthermischen Kraftwerk**

(71) Anmelder: SIEMENS AKTIENGESELLSCHAFT, 80333 München (DE)
(72) Erfinder: Birnbaum, Jürgen, 88289 Waldburg (DE); Fichtner, Markus, 91639 wolframs-Eschenbach (DE); Graeber, Carsten, 91056 Erlangen (DE); Zimmermann, Gerhard Dr., 91315 Höchstadt/Aisch (DE)

(57) **Zusammenfassung**

Die Erfindung betrifft ein Verfahren zur Regelung eines solaren Energieertrags in einem solarthermischen Kraftwerk (1), welches zumindest einen ersten solaren Kraftwerkteil (8) mit einem Solarfeld (2) sowie einen zweiten Kraftwerkteil (9) umfasst, wobei das Solarfeld (2) solare Energie mit einem solaren Energieertrag erzeugt, wobei die Energie zwischen Solarfeld (2) und Kraftwerkteil (9) durch ein Wärmeträgermedium (3) transportiert wird, wobei der zweite Kraftwerkteil(9) für eine maximal zulässige Energiezufuhr ausgelegt ist, und wobei eine Energie im ersten solaren Kraftwerkteil (8) welche über der maximal zulässigen Energiezufuhr des zweiten Kraftwerkteils (9) als eine Überschussenergie bezeichnet wird und bei dem bei Überschussenergie zumindest ein Teilstrom des Wärmeträgermediums (3) an dem zweiten Kraftwerkteil (9) vorbeigeführt wird. Die Erfindung betrifft ebenfalls eine Vorrichtung zum Durchführen dieses Verfahrens.

## Beschreibung

Die Erfindung betrifft ein Verfahren zur Regelung des solaren Energieertrags in einem solarthermischen Kraftwerk, welches zumindest einen ersten solaren Kraftwerkteil mit einem Solarfeld sowie einen zweiten Kraftwerkteil umfasst, wobei das Solarfeld solare Energie mit einem solaren Energieertrag erzeugt. Die Energie zwischen Solarfeld und zweitem Kraftwerkteil wird dabei durch ein Wärmeträgermedium transportiert.
Der zweite Kraftwerkteil ist für eine maximal zulässige solare Energiezufuhr ausgelegt. Weiterhin betrifft die Erfindung eine Vorrichtung zur Regelung des solaren Energieertrags in einem solarthermischen Kraftwerk, welches zumindest einen ersten solaren Kraftwerkteil mit einem Solarfeld sowie einen zweiten Kraftwerkteil umfasst, wobei der erste solare Kraftwerkteil und der zweite Kraftwerkteil wärmetechnisch aneinander gekoppelt sind.

Ein solarthermisches Kraftwerk nutzt solare Strahlungsenergie um elektrische Energie zu produzieren. Es besteht aus einem solaren Kraftwerkteil zur Absorption der Sonnenenergie und einem zweiten meist konventionellen Kraftwerkteil. Der solare Kraftwerkteil umfasst dabei ein Solarfeldkreislauf mit einem Solarfeld, das heißt ein Konzentrationssystem, welches geometrisch verschiedene Kollektoren umfasst. Die konzentrierenden Kollektoren sind der Hauptbestandteil des solaren Kraftwerkteils. Bekanntere Kollektoren sind dabei der Paraboloidrinnenkollektor, der Fresnel-Kollektor, der Solar-Turm und der Paraboloidspiegel. Die Kollektoren konzentrieren die Sonnenstrahlen auf ein in der Fokuslinie platziertes Absorberrohr. Dort wird die Sonnenenergie absorbiert und als Wärme an ein Wärmeträgermedium weitergegeben. Je nach Art des Wärmeträgermediums wird es nach der Erhitzung direkt zum konventionellen Kraftwerkteil gepumpt. Als Wärmeträgermedium kann dabei Thermoöl, Wasser, Luft oder Salzschmelze zum Einsatz kommen.

Der konventionelle Kraftwerkteil umfasst zumeist einen Wasser-Dampf-Kreislauf mit einer Dampf- oder/und Gasturbine sowie einen Generator und einen Kondensator. Umfasst beispielsweise dabei der konventionelle Kraftwerkteil eine Dampfturbine, so wird dabei der Wärmeeintrag durch den Kessel ersetzt durch den Wärmeeintrag erzeugt vom Solarfeld.

Wird im Solarfeld nicht Wasser als Wärmeträgermedium verwendet, so sind zwischen dem ersten solaren Kraftwerkteil, dem dazugehörenden Solarfeldkreislauf und dem konventionellen Kraftwerkteil mit dem dazugehörenden Wasser-Dampf-Kreislauf, Wärmetauscher zwischengeschaltet, um die im Solarfeld erzeugte Energie vom Wärmeträgermedium des Solarfeldkreislaufes auf den Wasser-Dampf-Kreislauf zu übertragen.

Die elektrische Leistung des solarthermischen Kraftwerks ist daher zum einen durch die thermischen Eigenschaften des Wärmeträgermediums zum anderen in hohem Maß durch die Wahl des Leistungsbereichs der Turbine festgelegt. Um die maximale Leistung zu erreichen, ist ein maximaler thermischer Wärmeeintrag in den Wasser-Dampf-Kreislauf nötig. Wird im Solarfeld ein höherer solarer Energieeintrag als er für die Zufuhr zu dem konventionellem Kraftwerkteil vorgesehen ist, produziert, so wird die solare Einstrahlung reduziert. Dies erfolgt üblicherweise dadurch, dass zumindest einige Solarkollektoren des Solarfeldes aus der Sonne gedreht werden. Dies stellt jedoch einen Energieverlust dar.

Um diesen Nachteil sowie einen Energieverlust bei Durchzug einer Wolkendecke und damit geringerer Sonnenstrahlung vorzubeugen, kann eine konventionelle Zusatzfeuerungen (Erdöl, Erdgas) in dem Solarfeldkreislauf eingebaut oder ein Wärmespeicher (Speicher) beispielsweise ein Salzschmelze-Speicher, ein Dampfspeicher oder aber ein Feststoffspeicher zum Wärmetauscher in den Solarfeldkreislauf eingebaut werden. Falls der Wärmespeicher jedoch mit einem anderen Wärmeträgermedium als der Solarfeldkreislauf betrieben wird, ist ein zusätzlicher Wärmetauscher für den Speicher nötig, der für einen sinnvollen Massenstrombereich des Wärmeträgermediums ausgelegt ist. Hier sind verschiedene Speicherarten zurzeit in der Erforschung und Erprobung. Aber bei fast allen sind noch grö-ßere Entwicklungsschritte notwendig, um sie in einem solarthermischen Kraftwerk effizient anwenden zu können. Eine weitgehend andere Lösung dieser Probleme wäre daher wünschenswert.

Die auf das Verfahren bezogene Aufgabe der Erfindung ist daher die Angabe eines Verfahrens zur Regelung eines solarthermischen Kraftwerks, welches sich auch bei Unterbrechung der Sonneneinstrahlung durch beispielsweise Wolkendurchzug und damit geringerer Sonneneinstrahlung durch eine weitgehend konstante, maximale Stromerzeugung durch Solarenergie auszeichnet und eine weitgehend vollständige Aufnahme der Sonnenenergie ermöglicht. Eine weitere Aufgabe ist die Angabe einer Vorrichtung zur Regelung eines solarthermischen Kraftwerks, die insbesondere eine Durchführung des oben genannten Verfahrens zulässt.

Bezogen auf das Verfahren wird die Aufgabe durch ein Verfahren zur Regelung eines solaren Energieertrags in einem solarthermischen Kraftwerk gelöst, welches zumindest einen ersten solaren Kraftwerkteil mit einem Solarfeld sowie einen zweiten Kraftwerkteil umfasst, wobei das Solarfeld solare Energie mit einem solaren Energieertrag erzeugt, wobei die Energie zwischen Solarfeld und zweitem Kraftwerkteil durch ein Wärmeträgermedium transportiert wird, wobei der zweite Kraftwerkteil für eine maximal zulässige Energiezufuhr ausgelegt ist, wobei eine Energie im ersten solaren Kraftwerkteil über der maximal zulässigen Energiezufuhr des zweiten Kraftwerkteils als eine Überschussenergie bezeichnet wird und wobei bei Überschussenergie zumindest ein Teilstrom des Wärmeträgermediums an dem zweiten Kraftwerkteil vorbeigeführt wird.

Die Erfindung geht von der Erkenntnis aus, dass der Massenstrom des Wärmeträgermediums im Solarfeld durch den maximal und minimal zulässigen Massenstrom in den Absorberrohren (Vermeidung von hot Spots bei Wolkendurchzug) beeinflusst wird. Das Wärmeträgermedium im ersten solaren Kraftwerkteil wird daher durch die sich so einstellende Temperatur, als auch die maximale zulässige Temperatur des Wärmeträgermediums selber bestimmt. Die sich einstellende Temperatur des Wärmeträgermediums nimmt jedoch unmittelbar Einfluss auf die erzeugte Energie im zweiten Kraftwerkteil. Um eine weitgehend konstante Energieerzeugung durch Solarenergie zu erzielen, wurde in der Erfindung erkannt, dass die maximal zulässige Temperatur des Wärmeträgermediums über einen weiten Betrieb zu halten ist. Dazu wird bei Überschussenergie, das heißt bei einem Energiebetrag im ersten solaren Kraftwerkteil, welcher über dem zulässigen Energiebetrag liegt, der dem zweiten Kraftwerkteil zugeführt werden darf, zumindest ein Teil dieser Überschussenergie an dem zweiten Kraftwerkteil vorbeigeführt. Damit wird vermieden, dass der zweite Kraftwerkteil, beispielsweise die Dampfturbine, einen zu hohen Energieertrag erfährt. Dadurch wird ebenfalls eine Reduktion von Sonneneinstrahlung durch beispielsweise Herausdrehen der Sonnenkollektoren, welches zur Verminderung der Energieproduktion durchgeführt wird, vermieden. Somit wird die komplette Energie der Sonneneinstrahlung aufgenommen. Weiterhin wird so einem Abfall der Stromerzeugung im zweiten Kraftwerkteil durch beispielsweise das Heraus- und Hereindrehen von Kollektoren im Solarfeld entgegengewirkt. Damit ist eine weitgehend konstante Stromerzeugung mittels Solarenergie möglich.

Bevorzugt wird der vorbeigeführte Teilstrom abhängig von der Überschussenergie im ersten solaren Kraftwerkteil eingestellt. Der Teilstrom wird dabei so eingestellt, dass er genau der Differenzenergie, das heißt die Überschussenergie abzüglich der für den zweiten Kraftwerkteil zulässigen Energie entspricht. Dies bedeutet, dass dem zweiten Kraftwerkteil, die im Wesentlichen maximal zulässige Energie zugeführt wird und so eine im Wesentlichen maximale, auf solarer Energie beruhende, Stromerzeugung stattfindet.

In bevorzugter Ausgestaltung wird der vorbeigeführte Teilstrom den dem Solarfeld zurückströmenden Massenstrom des Wärmeträgermediums zugeführt. Dieses Gemisch, mit der entsprechenden Mischtemperatur, wird in das Solarfeld eingeleitet. Insgesamt wird somit die mittlere Temperatur des Solarfeldinventars und damit auch der Wärmeinhalt erhöht, d.h. solare Energie wird vorübergehend im Wärmeträgermedium gespeichert (Kurzzeitspeicher). Dadurch kann ein kurzzeitiger Einbruch des solaren Energieeintrags (z.B. bei Wolkendurchzug) ausgeglichen werden. Somit wird einem Abfall der Stromerzeugung im zweiten Kraftwerkteil effektiv entgegengewirkt. Zudem wird auch hier ein verfrühtes Herausdrehen der Sonnenkollektoren aus der Sonne vermieden. Es ist somit also eine verbesserte solare Energieaufnahme möglich. Bevorzugt wird dabei genau die Differenzenergie, das heißt die Überschussenergie abzüglich der für den zweiten Kraftwerkteil zulässigen Energie, als Teilstrom verwendet. Diese Differenzenergie wird dann wieder mit dem Massenstrom des Wärmeträgermediums, welches zum Solarfeld zurückströmt gemischt und erhöht die Energie des Wärmeträgermediums um diese Energiedifferenz.

Bevorzugt wird zwischen dem ersten solaren Kraftwerkteil und dem zweiten Kraftwerkteil ein Wärmetausch durchgeführt. Dadurch kann im ersten solaren Kraftwerkteil mit einem Solarfeldkreislauf ein anderes Wärmeträgermedium als im zweiten Kraftwerkteil verwendet werden. Durch den Wärmetausch wird die Energie des ersten solaren Kraftwerkteils auf den zweiten Kraftwerkteil übertragen. Diese Übertragung kann beispielsweise durch Konvektion stattfinden.

Bevorzugt wird dabei bei Überschussenergie zumindest ein Teilstrom des Wärmeträgermediums an dem Wärmetausch vorbeigeführt. Dadurch wird vermieden, dass die Energie im Teilstrom vom Wärmeträgermedium auf den zweiten Kraftwerkteil übertragen wird.

In bevorzugter Ausgestaltung wird die vom Solarfeld erzeugte solare Energie zumindest teilweise zwischengespeichert. Hier wird zur Speicherung beispielsweise ein Wärmespeicher in ersten solaren Kraftwerkteil und/oder im zweiten Kraftwerkteil eingebaut. Falls der Wärmespeicher mit einem anderen Wärmeträgermedium als beispielsweise der Solarfeldkreislauf/Wasser-Dampf-Kreislauf betrieben wird, ist ein zusätzlicher Wärmetauscher für den Speicher nötig, der für einen sinnvollen Massenstrombereich ausgelegt ist.

Bevorzugt weist das Verfahren mit einem Wärmetausch und einer Speicherung folgende Schritte auf:

Der erste Schritt ist die Erzeugung von solarer Energie mit einem solaren Energieertrag im ersten solaren Kraftwerkteil.

Im zweiten Schritt wird die solare Energie zu dem zweiten Kraftwerkteil oder zum Wärmetausch zugeführt. Durch die Zuführung zum Wärmetausch wird die Energie dann dem zweiten Kraftwerkteil zugeführt.

Im dritten Schritt findet die ganze oder teilweise Speicherung der solaren Energie bei Überschussenergie statt.

Bevorzugt wird bei Erzeugung von solarer Energie mit einem Energieertrag, der über die Summe der Speicherkapazität des Speichers und der maximal zulässigen Energiezufuhr des zweiten Kraftwerkteils liegt, zumindest ein Teilstrom der solaren Energie am zweiten Kraftwerkteil mittels des Wärmeträgermediums vorbeigeführt.

Hier wird der Massenstrom des Wärmeträgermediums mit der maximal erlaubten Energie dem zweiten Kraftwerkteil zugeführt. Dies kann auch über einen Wärmetausch erfolgen. Dadurch erfolgt dann die Stromerzeugung aus solarer Energie im zweiten Kraftwerkteil. Bei Überschussenergie wird diese zunächst zumindest teilweise zum Speicher geleitet und die Wärme in den Speicher übertragen. Kann dieser die überschüssige Energie durch bereits vollständige Auffüllung oder durch sonstige anderweitige Einstellung an der Anlage nicht mehr aufnehmen, so wird der Teilstrom des Wärmeträgermediums mit weiterer Überschussenergie sowohl am Speicher als auch am zweiten Kraftwerkteil vorbeigeführt und später dem bereits abgekühlten Massenstrom des Wärmeträgermediums, der in das Solarfeld zurückströmt wieder beigemischt. Insgesamt wird somit die mittlere Temperatur des dem Solarfeld zurückfließenden Strom des Wärmeträgermediums und somit auch der Wärmeinhalt erhöht, d.h. solare Energie wird vorübergehend im Wärmeträgermedium gespeichert (Kurzzeitspeicher). Dadurch kann ein kurzzeitiger Einbruch des solaren Energieeintrags (z.B. bei Wolkendurchzug) ausgeglichen werden.

In vorteilhafter Ausgestaltung wird bei Erreichen der maximalen zulässigen Temperatur des Wärmeträgermediums im ersten solaren Kraftwerkteil eine Reduktion von Sonneneinstrahlung im Solarfeld durchgeführt. Somit wird verhindert, dass die maximal zulässige Temperatur des Wärmeträgermediums überschritten wird.

Bevorzugt werden im ersten solaren Kraftwerkteil oder/und im zweiten Kraftwerkteil eine oder mehrere Zusatzfeuerungen durchgeführt. Dies gleicht Schwankungen der solaren Einstrahlung aus und verlängert die Betriebszeit in den Morgen- und Abendstunden. Dies ist besonders vorteilhaft bei bestehen fester Stromabnahmeverträge.

Bezogen auf die Vorrichtung wird die Aufgabe durch eine Vorrichtung zur Regelung des solaren Energieertrags in einem solarthermischem Kraftwerk gelöst, welche zumindest einen ersten solaren Kraftwerkteil mit einem Solarfeld sowie einen zweiten Kraftwerkteil umfasst, wobei der erste solare Kraftwerkteil und der zweite Kraftwerkteil wärmetechnisch aneinander gekoppelt sind, wobei zur Vermeidung des Zuführens von Energie zum zweiten Kraftwerkteil über einen maximalen Energieertrag ein oder mehrerer Bypass-Leitungen zum Vorbeiführen wenigstens eines Teils der im solaren Kraftwerkteil erzeugten Energie am zweiten Kraftwerkteil vorgesehen sind.

Die Vorrichtung ist insbesondere dafür geeignet, das oben beschriebene Verfahren durchzuführen. Die Vorteile des Verfahrens ergeben sich daher auch für die Vorrichtung.

Weitere Vorteile, Merkmale und Einzelheiten der Erfindung ergeben sich aus der nachfolgenden Beschreibung bevorzugter Ausführungsbeispiele und Zeichnungen sowie aus weiteren Unteransprüchen.

Im Folgenden wird die Erfindung beispielhaft anhand einer Zeichnung näher erläutert.

Darin zeigt in vereinfachter und nicht maßstäblicher Darstellung:
- FIG 1: einen schematischer Aufbau eines solarthermischen Kraftwerks nach dem Stand der Technik,
- FIG 2: das erfindungsgemäße Verfahren zur Regelung eines solarthermischen Kraftwerks ohne Speicher,
- FIG 3: eine erfindungsgemäße Vorrichtung zur Regelung eines solarthermischen Kraftwerks ohne Speicher,
- FIG 4: eine erfindungsgemäße Vorrichtung zur Regelung eines solarthermischen Kraftwerks mit Speicher.

Gleiche Teile sind in allen Figuren mit denselben Bezugszeichen versehen.

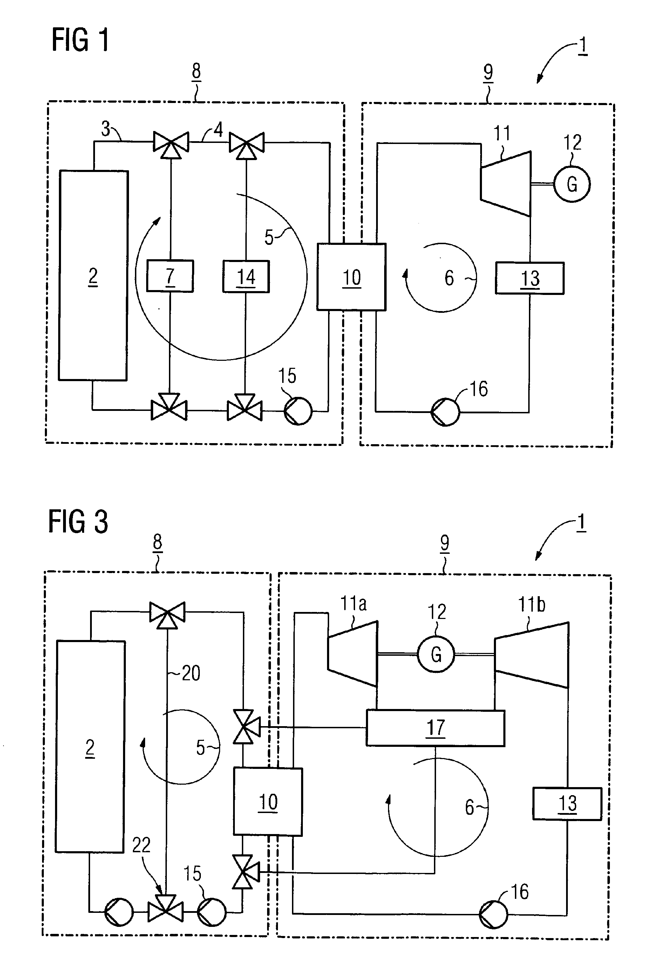

FIG 1 zeigt einen schematischen Aufbau eines solarthermischen Kraftwerks 1 nach dem Stand der Technik. Dieses besteht aus einem solaren Teil 8 mit einem Solarfeld 2 in dem die Strahlung konzentriert wird und Wärmeenergie umgewandelt wird. Dabei kann das Solarfeld 2 beispielsweise aus Parabollrinnenkollektoren, aus Solartürmen, Paraboloidspiegel- oder Fresnel-Spiegel-Kollektoren bestehen. Diese bündeln die Sonnenstrahlung auf ein in der Brennlinie verlaufendes Absorberrohr (nicht gezeigt). In diesem wird die konzentrierte Sonnenstrahlung in Wärme umgesetzt und an ein zirkulierendes Wärmeträgermedium 3 in einem Leiter 4 abgegeben. Das Wärmeträgermedium 3 kann dabei Wasserdampf, Thermoöl, Luft, Salzschmelze sein. Das hier gezeigte solarthermische Kraftwerk 1 nach dem Stand der Technik besteht aus zwei Kreisläufen: einem Solarfeldkreislauf 5 und einem konventionellem Kraftwerkskreislauf, der hier als Wasser-Dampf-Kreislauf 6 ausgeführt ist. Der Solarfeldkreislauf 5 besteht weiterhin aus einer Speichermöglichkeit 7 der erzeugten solaren Energie beispielsweise einem Salzschmelze-Speicher, Dampfspeicher, oder Feststoffspeicher und aus einer Zusatzfeuerung 14 beispielsweise aus Erdöl, Erdgas um einen gleichmäßigeren und erweiterten Wärmeeintrag sicherzustellen. Weiterhin besteht das solarthermische Kraftwerk 1 aus einem konventionellen Kraftwerkteil 9 mit dem Wasser-Dampf-Kreislauf 6 zur Erzeugung elektrischer Energie. Zwischen dem Solarfeldkreislauf 5 und dem Wasser-Dampf-Kreislauf 6 sind Wärmetauscher 10 zwischengeschaltet, um die Energie vom Solarfeldwärmeträgermedium auf das Wasser im Wasser-Dampf-Kreislauf 6 zu übertragen. Der konventionelle Kraftwerkteil 9 besteht aus einer Dampf- oder/und Gasturbine 11, einem Generator 12 und einem Kondensator 13.

Im Wasser-Dampf-Kreislauf 6 wird Wasser verdampft und überhitzt. In der Turbine, welche den Generator 12 antreibt wird er entspannt und dann von einem Kondensator verflüssigt und in den Wasser-Dampf-Kreislauf 6 zurückgegeben. Auch der Wasser-Dampf-Kreislauf 6 kann eine Zusatzfeuerung 14 aufweisen.

Beim ausschließlich solaren Betrieb wird die gesamte eingestrahlte Energie zur Produktion elektrischer Energie benutzt. Liegt die erzeugte solare Energie jedoch höher als die Speicherkapazität des Speichers 7 und die maximal zulässige Zufuhr von solarer Energie über der maximal zulässigen solaren Energiezufuhr des konventionellen Kraftwerkteils 9, so wird üblicherweise die genutzte solare Einstrahlung reduziert, d.h. Teile des Solarkollektoren des Solarfelds 2 werden aus der Sonne gedreht. Eine vollständige Nutzung der Sonnenenergie ist damit nicht möglich.

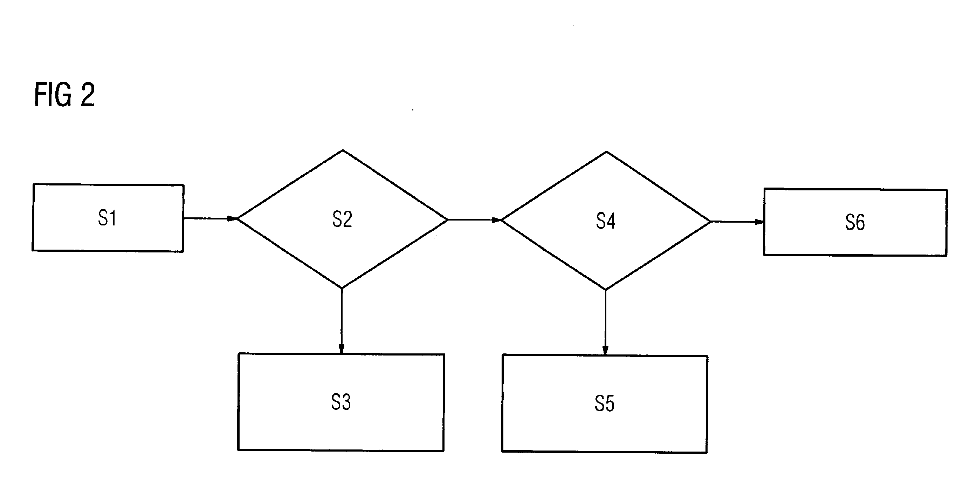

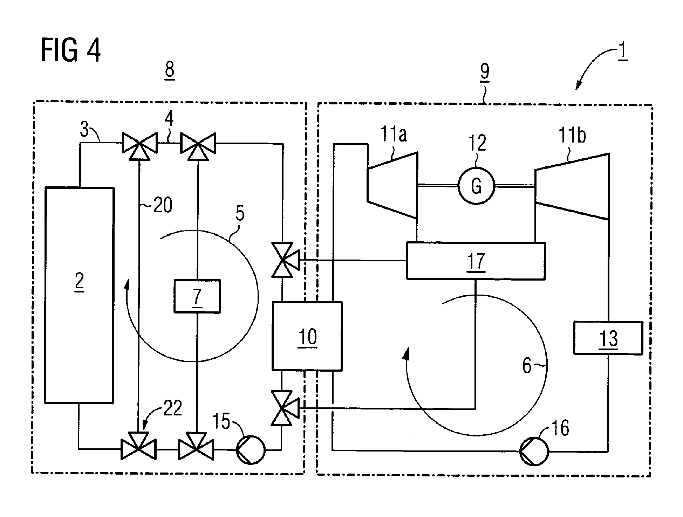

FIG 2 und FIG 3 zeigen das erfindungsgemäße Verfahren (FIG 2) und die erfindungsgemäße Vorrichtung(FIG 3) zur Regelung eines solarthermischen Kraftwerks 1 mit Wärmerauscher 10 ohne Speicher. Die Erzeugung von Solarenergie im Solarfeld 2 wird durch die vorherrschende Sonneneinstrahlung im Zusammenhang mit dem minimal und maximal zulässigen Massenstrom im Absorberrohr (nicht gezeigt) bestimmt. Ist die Massenstrom größer als der minimal zulässige Massenstrom im Absorberrohr (FIG 2: S1) so wird diese von Absorber an das Wärmeträgermedium 3 abgegeben. Ist der durch das Solarfeld 2 erzeugte Massenstrom in den Leitern 4 kleiner als die maximale zulässige Energiezufuhr des konventionellen Kraftwerkteils 9 und kleiner als die maximal zulässige Temperatur des Wärmeträgermediums 3 (FIG 2: S2), so wird der Massenstrom bevorzugt vollständig dem konventionellen Kraftwerkteil 9 durch den Wärmetauscher 10 zugeführt (FIG 2: S3). Somit wird die Energie des Solarfeldkreislaufes 5 an den Wasser-Dampf-Kreislauf 6 abgeben. Ist der durch das Solarfeld 2 erzeugte Massenstrom in den Leitern 4 größer als die maximale zulässige Energiezufuhr des konventionellen Kraftwerkteils 9, jedoch kleiner als die maximal zulässige Temperatur des Wärmeträgermediums 3 (FIG 2: S4), so wird mindestens ein Teil des durch das Solarfeld 2 erzeugten Massenstroms des Wärmeträgermediums 3 an den konventionellem Kraftwerkteil 9 bzw. hier an dem Wärmetauscher 10 vorbeigeführt (FIG 2: S5). Dazu werden dem Wärmetauscher 10 ein oder mehrere Bypass-Leitungen 20 zum Vorbeiführen eines Teils des Massenstroms, das heißt eines Teils der solaren Energie, vorgeschaltet. Bevorzugt wird durch die Bypass-Leitungen 20 der Differenzmassenstrom zwischen aktuellem Massenstrom, und dem Massenstrom welcher der maximal zulässigen Energiezufuhr des konventionellem Kraftwerkteils 9 entspricht, an den Wärmetauschern 10 vorbeigeführt. Der an den Wärmetauschern 10 vorbeigeführte Massenstrom wird anschließend an einem Mischpunkt 22 wieder mit dem Massenstrom aus den Bypass-Leitungen 20 gemischt. Dieses Gemisch, mit der entsprechenden Mischtemperatur, wird in das Solarfeld 2 eingeleitet. Die Mischtemperatur liegt nun höher als es der maximal zulässigen Energiezufuhr des konventionellen Kraftwerkteils 9 entspricht. Insgesamt wird somit die mittlere Temperatur des Solarfeldinventars und damit auch der Wärmeinhalt erhöht, d.h. solare Energie wird vorübergehend im Wärmeträgermedium 3 in den Leitern 4 gespeichert. Dadurch kann ein kurzzeitiger Einbruch des solaren Energieeintrags (z.B. bei Wolkendurchzug) ausgeglichen werden. Erzielt die erzeugte solare Energie durch das Solarfeld 2 im Wärmeträgermedium 3 eine höhere Temperatur als, die zulässige maximale Temperatur des Wärmeträgermediums 3 wird die genutzte solare Einstrahlung reduziert, d.h. Teile der Solarkollektoren werden aus der Sonne gedreht (FIG 2, S6) .

Das hier beschriebene Verfahren sowie die Vorrichtung können prinzipiell auch auf vergleichbare Kraftwerkskonzepte z.B. solarthermische Kraftwerke 1 mit/ohne Speicherung 7 im solaren und/oder konventionellen Kraftwerkteil 9 und mit/ohne Zusatzfeuerung 14 im solaren und/oder konventionellen Kraftwerkteil 9 angewendet werden. In FIG 4 ist beispielsweise eine Vorrichtung zur Regelung eines solarthermischen Kraftwerks mit Speicher dargestellt.

## Patentansprüche

1. Verfahren zur Regelung eines solaren Energieertrags in einem solarthermischen Kraftwerk (1), welches zumindest einen ersten solaren Kraftwerkteil (8) mit einem Solarfeld (2) sowie einen zweiten Kraftwerkteil (9) umfasst, wobei das Solarfeld (2) solare Energie mit einem solaren Energieertrag erzeugt, wobei die Energie zwischen Solarfeld (2) und Kraftwerkteil (9) durch ein Wärmeträgermedium (3) transportiert wird, wobei der zweite Kraftwerkteil(9) für eine maximal zulässige Energiezufuhr ausgelegt ist, und wobei eine Energie im ersten solaren Kraftwerkteil (8), welche über der maximal zulässigen Energiezufuhr des zweiten Kraftwerkteils (9) als eine Überschussenergie bezeichnet wird,
**dadurch gekennzeichnet, dass** bei Überschussenergie zumindest ein Teilstrom des Wärmeträgermediums (3) an dem zweiten Kraftwerkteil (9) vorbeigeführt wird.

2. Verfahren nach Anspruch 1,
**dadurch gekennzeichnet, dass** der vorbeigeführte Teilstrom abhängig von der Überschussenergie im ersten solaren Kraftwerkteil (8) eingestellt wird.

3. Verfahren nach einem der vorhergehenden Ansprüche, **dadu rch gekennzeichnet**, dass der vorbeigeführte Teilstrom einem dem Solarfeld (2) zurückströmenden Massenstrom des Wärmeträgermediums (3) zugeführt wird.

4. Verfahren nach Anspruch 3, **dadurch gekennze ichnet**, dass zwischen dem ersten solaren Kraftwerkteil (8) und dem zweiten Kraftwerkteil (9) ein Wärmetausch (10) durchgeführt wird.

5. Verfahren nach Anspruch 4, **dadurch gekennze ichnet**, dass bei Überschussenergie zumindest ein Teilstrom des Wärmeträgermediums (3) an dem Wärmetausch (10) vorbeigeführt wird.

6. Verfahren nach einem der vorhergehenden Ansprüche,
**dadurch gekennzeichnet, dass** die vom Solarfeld (2) erzeugte solare Energie zumindest teilweise zwischengespeichert wird.

7. Verfahren nach Anspruch 6,
**dadurch gekennzeichnet, dass** die vom Solarfeld (2) erzeugte solare Energie zumindest teilweise zwischen Solarfeld (2) und Wärmetausch (10) zwischengespeichert wird.

8. Verfahren nach Anspruch 6 oder 7 **gekennzeichnet durch** die folgende Schritte:
- Erzeugung von solarer Energie mit einem solaren Energieertrag im ersten solaren Kraftwerkteil (8),
- Zuführen der solaren Energie zu dem zweiten Kraftwerkteil (9) oder dem Wärmetauscher (10),
- Ganze oder teilweise Speicherung der solaren Energie bei Überschussenergie.

9. Verfahren nach Anspruch 8,
**dadurch gekennzeichnet, dass** bei Erzeugung von solarer Energie mit einem Energieertrag, der über die Summe der Speicherkapazität des Speichers (7) und der maximal zulässigen Energiezufuhr des zweiten Kraftwerkteils (9) liegt, zumindest ein Teilstrom der solaren Energie am zweiten Kraftwerkteils (9) mittels des Wärmeträgermediums (3) vorbeigeführt wird.

10. Verfahren nach einem der vorhergehenden Ansprüche,
**dadurch gekennzeichnet, dass** bei Erreichen der maximalen zulässigen Temperatur des Wärmeträgermediums (3) eine Reduktion von Sonneneinstrahlung im Solarfeld (2) durchgeführt wird.

11. Verfahren nach einem der vorhergehenden Ansprüche,
**dadurch gekennzeichnet, dass** im ersten solaren Kraftwerkteil (8) und/oder zweitem Kraftwerkteil (9) eine oder mehrere Zusatzfeuerungen (14) durchgeführt werden.

12. Verfahren nach einem der vorhergehenden Ansprüche,
**dadurch gekennzeichnet, dass** in dem zweiten Kraftwerkteil (9) Strom erzeugt wird.

13. Vorrichtung zur Regelung des solaren Energieertrags in einem solarthermischem Kraftwerk (1), welches zumindest einen ersten solaren Kraftwerkteil (8) mit einem Solarfeld (2) sowie einen zweiten konventionellen Kraftwerkteil (9) umfasst, wobei der erste solare Kraftwerkteil (8) und der zweite Kraftwerkteil (9) wärmetechnisch aneinander gekoppelt sind, **dadurch gekennzeichnet, dass** zur Vermeidung des Zuführens von Energie zum zweiten Kraftwerkteil (9) über einen maximalen Energieertrag ein oder mehrerer Bypass-Leitungen (20) zum Vorbeiführen wenigstens eines Teils der im solaren Kraftwerkteil (8) erzeugten Energie am zweiten Kraftwerkteil (9) vorgesehen sind.

14. Vorrichtung nach Anspruch 13,
**dadurch gekennzeichnet, dass** zwischen Solarfeld (2) und zweitem Kraftwerkteil (9) ein oder mehrerer Wärmetauscher (10) vorgesehen sind.

15. Vorrichtung nach Anspruch 14,
**dadurch gekennzeichnet, dass**, dass die ein oder mehrerer Bypass-Leitungen (20) dem Wärmetauscher (10) vorgeschaltet sind.

16. Vorrichtung nach einem der Ansprüche 13-15,
**dadurch gekennzeichnet, dass** eine Kopplung des ersten solaren Kraftwerkteils (8) und des zweiten Kraftwerkteils (9) durch Thermoöl und/oder Luft, und/oder Wasserdampf und/oder Salzschmelze vorgesehen ist.

17. Vorrichtung nach einem der Ansprüche 13-16,
**dadurch gekennzeichnet, dass** für einen erweiterten Wärmeeintrag eine oder mehrere Zusatzfeuerung (14) im ersten solaren Kraftwerkteil (8) mittels Erdöl oder/und Erdgas vorgesehen sind.

18. Vorrichtung nach einem der Ansprüche 13-17,
**dadurch gekennzeichnet, dass** für einen erweiterten Wärmeeintrag eine oder mehrere Zusatzfeuerung (14) im zweiten Kraftwerkteil (9) mittels Erdöl oder/und Erdgas vorgesehen sind.

19. Vorrichtung nach einem der Ansprüche 13-18,
**dadurch gekennzeichnet, dass** der zweiten Kraftwerkteil ein konventioneller Kraftwerkteil (9) ist.

20. Vorrichtung nach Anspruch 19,
**dadurch gekennzeichnet, dass** der konventionelle Kraftwerkteil eine Dampfturbine und/oder Gasturbine (11) umfasst.

21. Vorrichtung nach einem der Ansprüche 19-20,
**dadurch gekennzeichnet, dass** der konventionelle Kraftwerkteil (9) einen Generator (12) zur elektrischen Energieerzeugung umfasst.
